# FASCICULE DE BREVET EUROPEEN

(11) **EP 3 104 997 B1**
(45) Date de publication et mention de la délivrance du brevet: **29.09.2021**
(21) Numéro de dépôt: 15705683.9
(22) Date de dépôt: 04.02.2015
(51) Int. Cl.: B23B 41/12, B23B 29/034, B23B 27/06

(54) **OUTIL TOURNANT D'ALÉSAGE À PLAQUETTES AMOVIBLES DE COUPE ET PROCÉDÉ D'USINAGE D'UN ALÉSAGE DE MOTEUR À COMBUSTION**
BOHRWERKZEUG MIT WENDESCHNEIDPLATTEN UND VERFAHREN ZUM BEARBEITEN EINER BOHRUNG EINES VERBRENNUNGSMOTORS
BORING TOOL WITH INDEXABLE CUTTING INSERTS AND PROCESS FOR MACHINING A BORE OF A COMBUSTION ENGINE

(30) Priorité: 14.02.2014 FR 1451180
(43) Date de publication de la demande: 21.12.2016
(73) Titulaire: Renault S.A.S., 92100 Boulogne-Billancourt (FR)
(72) Inventeur: CHERONNEAU, Gérard, F-91460 Marcoussis (FR)
(86) Numéro de dépôt international: PCT/FR2015/050253
(87) Numéro de publication internationale: WO 2015/121565

(56) Documents cités:
- WO-A1-2013/142885
- DE-A1-102009 028 040
- US-A1- 2004 099 137
- US-A1- 2011 023 777
- US-A1- 2014 026 492
- None

## Description

La présente invention concerne le domaine de l'alésage de pièces métalliques, et plus particulièrement les opérations de finition d'alésage de cylindre sur les moteurs à combustion.

L'invention a pour objet un outil tournant d'alésage à plaquettes amovibles, comportant un corps porte-plaquettes rotatif muni de cartouches retenant des plaquettes de coupe amovibles destinées à usiner un fût cylindrique par déplacement axial de l'outil dans le fût, et un nouveau procédé d'usinage de finition d'un alésage dans un carter de moteur à combustion avec cet outil d'usinage tournant.

Cette invention trouve une application privilégiée, mais non exclusive, dans l'usinage et la finition d'alésages cylindriques sur des pièces mécaniques, telles que des carter-cylindres métalliques de moteurs à combustion interne.

Ces opérations sont généralement réalisées à l'aide d'outils à plaquettes amovibles, mono- ou multi-dents, conçus pour usiner et finir des opérations d'alésage dans la fonte ou l'aluminium. Des opérations d'ébauche, puis de finition, sont alors réalisées sur la chemise en fonte en plusieurs passages d'outil, avec des plaquettes dédiées au dégrossissage, et d'autres dédiées aux passages de finition.

La publication DE 10 2009 028040 A1 divulgue un outil tournant d'alésage selon le préambule de la revendication 1.

Par la publication DE 1 281 803, on connaît un outil de taraudage muni d'une seule plaquette amovible de coupe, qui présente une première arête de piquage en forme de dent triangulaire, apte à creuser un filet dans une matière à tarauder, suivie d'une deuxième arête de planage en forme de dent allongée. Une telle plaquette permet de tarauder un filetage femelle en un seul passage d'outil, en arasant les pics de matière soulevés par l'arête de piquage, à l'aide de l'arête de planage. Cependant, l'outil, conçu pour réaliser des taraudages femelles pour vis filetées, n'est pas assez précis pour l'usinage des fûts de cylindre de moteur, qui implique le respect de côtes très précises sur les sillons creusés dans le métal, pour la bonne lubrification des cylindres. Un état de surface suffisamment aplani pour limiter les frottements, tout en permettant d'accrocher un revêtement pour régulariser la profondeur des sillons creux est en effet exigé. Cet état de surface ne peut être obtenu avec l'outil décrit dans cette publication, dont la plaquette unique n'assure pas le niveau de précision requis.

La présente invention vise à réaliser des sillons avec un outil équipé de plaquettes amovibles disposées spécialement pour obtenir le niveau de qualité d'état de surface, et respecter exactement les côtes qui sont imposées par les bureaux d'étude, pour les fûts de cylindre.

Dans ce but, elle propose un outil tournant d'alésage selon la revendication 1, comportant une première plaquette de coupe apte à ébaucher des sillons dans la matière à usiner, une deuxième plaquette de finition des sillons ébauchés par la première, et une troisième plaquette de planage, apte à aplanir les pics de matière soulevés par les deux premières.

De préférence, les trois plaquettes sont disposées en escalier autour du corps porte-outil, de manière à pénétrer successivement dans la matière.

L'invention propose aussi un procédé d'usinage selon la revendication 7, qui réalise, lors d'un même passage de l'outil, des opérations simultanées d'ébauche de sillons, de piquage de sillons, et d'aplanissement de surface, qui sont réalisées par des plaquettes dédiées respectivement à chacune de ces opérations.

L'invention sera mieux comprise à la lecture de la description suivante d'un mode de réalisation non limitatif de celle-ci, en liaison avec les dessins annexés, sur lesquels :
- la figure 1 est une vue d'ensemble d'un outil tournant conforme à l'invention,
- la figure 2 est une vue de dessous de la figure 1, et
- la figure 3 met en évidence l'étagement radial des plaquettes sur l'outil.

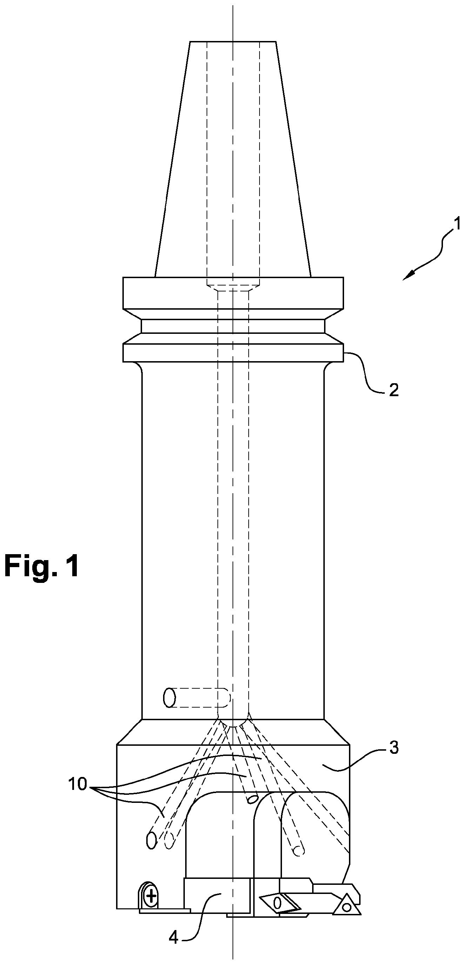

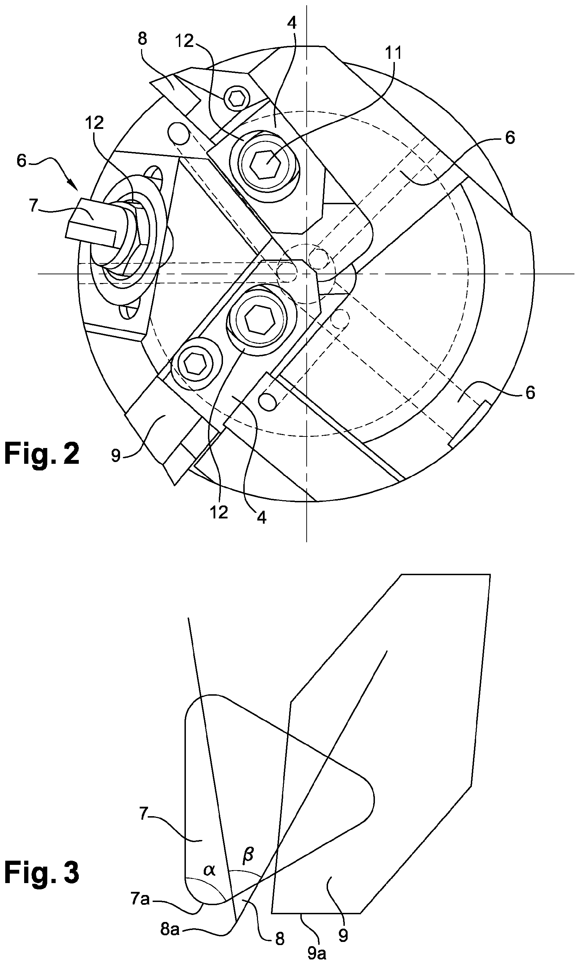

L'outil tournant de la figure 1 se présente sous la forme d'un porte-plaquette 1 standard avec un épaulement d'accrochage 2 sur la machine d'entraînement (non représentée), et un corps de porte-plaquettes 3. L'outil présente des trous d'arrosage internes 10 des plaquettes de coupe 7, 8, 9 pour leur refroidissement. Le porte-outil 3 porte plusieurs cartouches 4, ou barres porte-plaquettes (trois dans l'exemple décrit). Les cartouches, ou barres 4, portent trois plaquettes de coupe différentes, dites d'ébauche 7, de finition 8, et de planage 9, qui sont visibles sur les figures 2 et 3. Les cartouches 4 sont ajustables en position par des vis de réglage 6, qui apparaissent sur la figure 2, permettant de régler l'angle de coupe des arêtes d'attaque de chaque plaquette. Elles sont serrées en position sur le corps 3 par des vis de serrage 11.

La figure 3 met en évidence le léger retrait de la plaquette d'ébauche 7 en direction radiale, vis-à-vis des deux autres. Les trois plaquettes 7, 8, 9 sont de préférence montées en escalier autour du porte-outil 3, de sorte qu'elles pénètrent successivement dans l'ordre ébauche, piquage et finition, lors de la pénétration de l'outil dans la matière à usiner.

Les plaquettes 7, 8, 9 présentent un trou de passage central 12 pour leur vis de serrage 11 sur la cartouche 4. La première plaquette 7 est une plaquette d'ébauche « dite à sillonner » de forme triangulaire, apte à creuser une ébauche de sillon dans la matière usinée. La deuxième plaquette 8 est également une plaquette dite « à sillonner ». Elle présente une dent de piquage 8a de forme triangulaire, dont l'angle de pointe □ est plus étroit que l'angle de coupe □ de la première, de manière à pénétrer dans le sillon ouvert par celle-ci, pour assurer sa finition. Enfin, la troisième plaquette 9 présente un plat de planage 9a, en forme de lame allongée, destiné à aplanir, lors de son passage, les pics de matière soulevés par les plaquettes précédentes, dans la masse métallique usinée.

Pour les applications de l'invention mentionnées plus haut, la plaquette de piquage 8 présente une arête de piquage triangulaire, dont l'angle de pointe est compris entre 35° et 40°, alors que la plaquette de planage 9, présente de préférence une forme rhombique.

Les arêtes 7a, 8a, 9a, des plaquettes 7, 8 9, peuvent être en différents matériaux, selon les matières à usiner. Elles peuvent être entièrement en carbure métallique (y compris les arêtes de piquage et de planage), de préférence en carbure de tungstène, pour usiner l'acier. Pour usiner la fonte, par exemple dans les chemises de fût de cylindre, elles sont de préférence en Nitrure de Bore Cubique (CBN). L'usinage de l'aluminium nécessite des diamants poly-cristallins (PCD) .

La plaquette d'ébauche 7 présente trois faces de coupe pouvant être utilisées successivement par retournement sur le corps 3. La plaquette de piquage 8 en présente deux : ces plaquettes peuvent être retournées sur leur cartouche 4 pour utiliser successivement toutes leurs arêtes de coupe. La disposition des plaquettes en escalier permet une attaque progressive de la matière usinée, réduisant l'effort de coupe de chaque plaquette, donc l'usure de celles-ci.

Comme indiqué plus haut, l'usinage des alésages de moteurs nécessite plusieurs opérations, notamment lorsqu'ils sont composés de différentes matières : au moins une opération d'ébauche et une étape de finition, suivie d'une étape de planage. Ainsi, lorsque l'outil porte un seul type de plaquette, plusieurs passages de cet outil sont nécessaires. En revanche, conformément à l'invention, avec des plaquettes dédiées respectivement à chaque passage, au dégrossissage (ébauche), à la finition et au planage, un seul passage d'outil suffit.

L'invention permet ainsi d'obtenir un « sillonnage » satisfaisant avec un état de surface prononcé en piquage, et aplani, dans des alésages de cylindre, notamment en fonte ou en aluminium, en un seul passage de l'outil, assurant le travail d'ébauche, le piquage des sillons et leur aplanissement, ou « planage ». Le nouveau procédé d'usinage de finition d'un alésage de cylindre dans un carter de moteur à combustion avec l'outil d'usinage tournant proposé, réalise ainsi simultanément, lors du même passage de l'outil, des opérations d'ébauche de sillons, de piquage de sillons, et d'aplanissement de surface, grâce aux différentes plaquettes 7, 8, 9, dédiées à chacune de ces opérations. La surface usinée permet ensuite d'accrocher un revêtement pour régulariser la profondeur des sillons creux. L'application du « process » sur la surface usinée, avec l'outil proposé, est un moyen efficace d'obtenir au final la régularité souhaitée.

## Revendications

1. Outil tournant d'alésage (1) à plaquettes amovibles (7), comportant un corps porte-plaquettes rotatif (3) muni de cartouches (4) retenant des plaquettes de coupe amovibles (7, 8, 9) destinées à usiner un fût cylindrique par déplacement axial de l'outil dans le fût, **caractérisé en ce qu'**il comporte une première plaquette d'ébauche (7), de forme générale triangulaire, apte à ébaucher des sillons dans la matière à usiner, une deuxième plaquette de finition (8) des sillons ébauchés par la première, qui présente un arête de piquage triangulaire dont l'angle de pointe est plus étroit que l'angle de coupe de la première, et une troisième plaquette (9) de planage, de forme rhomboïdale avec une arête de coupe (9a) plane, qui est apte à aplanir les pics de matière soulevés par les deux premières.

2. Outil tournant d'alésage selon la revendication 1, **caractérisé en ce que** les trois plaquettes (7, 8, 9) sont disposées en escalier autour du corps porte-outil (3), de manière à pénétrer successivement dans la matière.

3. Outil tournant d'alésage selon la revendication 1 ou 2, **caractérisé en ce que** l'angle de pointe de la plaquette de finition (8) est compris entre 35° et 40°.

4. Outil tournant d'alésage selon la revendication 1, 2 ou 3, **caractérisée en ce que** les arêtes de coupe (7a, 8a, 9a) des plaquettes (7, 8, 9) sont en carbure métallique.

5. Outil tournant d'alésage selon l'une des revendications précédentes, **caractérisé en ce que** les arêtes de piquage (8a) sont en en Nitrure de Bore Cubique (CBN).

6. Outil tournant d'alésage selon l'une des revendications 1 à 5, **caractérisée en ce que** les arêtes (7a, 8a, 9a) des plaquettes (7, 8, 9) sont en diamants poly-cristallins.

7. Procédé d'usinage de finition d'un alésage de cylindre dans un carter de moteur à combustion **caractérisé en ce qu'**il est mis en œuvre avec un outil d'usinage tournant (1) conforme à l'une des revendications 1 à 6, le procédé combinant lors du même passage de l'outil des opérations simultanées d'ébauche de sillons, de piquage de sillons et d'aplanissement de surface, réalisées respectivement par une première plaquette d'ébauche (7), de forme générale triangulaire, une deuxième plaquette de finition (8) des sillons ébauchés par la première, et une troisième plaquette (9) de planage.

8. Procédé d'usinage de finition selon la revendication 7, **caractérisé en ce que** la surface usinée permet d'accrocher un revêtement pour régulariser la profondeur des sillons creux.

## Patentansprüche

1. Drehendes Bohrwerkzeug (1) mit Wendeplatten (7), umfassend einen rotierenden Plattenhalterkörper (3), der mit Kassetten (4) versehen ist, die Wendeschneidplatten (7, 8, 9) halten, welche dazu bestimmt sind, einen zylindrischen Schaft durch eine axiale Verschiebung des Werkzeugs in dem Schaft zu bearbeiten, **dadurch gekennzeichnet, dass** es Folgendes umfasst: eine erste Platte zum Schruppen (7) mit im Wesentlichen dreieckiger Form, die dazu fähig ist, in dem zu bearbeitenden Werkstoff Rillen zu schruppen, eine zweite Platte zum Endbearbeiten (8) der durch die erste Platte geschruppten Rillen, die eine dreieckige Stechkante aufweist, deren Spitzenwinkel schmaler als der Schneidwinkel der ersten Platte ist, und eine dritte Platte (9) zum Ebnen mit einer Rhombenform und einer ebenen Schneidkante (9a), die dazu fähig ist, die Werkstofferhöhungen, die durch die zwei ersten Platten hervorgebracht wurden, zu schlichten.

2. Drehendes Bohrwerkzeug nach Anspruch 1, **dadurch gekennzeichnet, dass** die drei Platten (7, 8, 9) treppenartig um den Werkzeughalterkörper (3) angeordnet sind, sodass sie nacheinander in den Werkstoff eindringen.

3. Drehendes Bohrwerkzeug nach Anspruch 1 oder 2, **dadurch gekennzeichnet, dass** der Spitzenwinkel der Endbearbeitungsplatte (8) zwischen 35° und 40° beträgt.

4. Drehendes Bohrwerkzeug nach Anspruch 1, 2 oder 3, **dadurch gekennzeichnet, dass** die Schneidkanten (7a, 8a, 9a) der Platten (7, 8, 9) aus Metallcarbid sind.

5. Drehendes Bohrwerkzeug nach einem der vorhergehenden Ansprüche, **dadurch gekennzeichnet, dass** die Stechkanten (8a) aus kubischem Bornitrid (CBN) sind.

6. Drehendes Bohrwerkzeug nach einem der Ansprüche 1 bis 5, **dadurch gekennzeichnet, dass** die Kanten (7a, 8a, 9a) der Platten (7, 8, 9) aus polykristallinem Diamant sind.

7. Bearbeitungsverfahren zur Endbearbeitung einer Zylinderbohrung in einem Verbrennungsmotorgehäuse, **dadurch gekennzeichnet, dass** es mit einem drehenden Bearbeitungswerkzeug (1) nach einem der Ansprüche 1 bis 6 umgesetzt wird, wobei das Verfahren während eines einzigen Durchgangs des Werkzeugs simultane Schritte des Schruppens von Rillen, des Stechens von Rillen und des Oberflächenschlichtens kombiniert, die jeweils durch eine erste Platte zum Schruppen (7) mit im Wesentlichen dreieckiger Form, eine zweite Platte zum Endbearbeiten (8) der durch die erste Platte geschruppten Rillen und eine dritte Platte (9) zum Ebnen durchgeführt werden.

8. Bearbeitungsverfahren zur Endbearbeitung nach Anspruch 7, **dadurch gekennzeichnet, dass** die bearbeitete Oberfläche es erlaubt, eine Beschichtung aufzubringen, um die Tiefe der ausgehöhlten Rillen zu regulieren.

## Claims

1. Rotary boring tool (1) with detachable inserts (7), comprising a rotary insert-holder body (3) provided with cartridges (4) which retain detachable cutting inserts (7, 8, 9) designed to machine a cylindrical shaft by axial displacement of the tool in the shaft, **characterized in that** it comprises a generally triangular first roughing insert (7) which can rough-cut grooves in the material to be machined, a second finishing insert (8) for finishing the grooves rough-cut by the first insert, this second insert having a triangular cutting ridge whose tip angle is narrower than the cutting angle of the first, and a third, flattening insert (9), which is of rhombic form with a flat cutting ridge (9a) and which can flatten the peaks of material raised by the two first inserts.

2. Rotary boring tool according to Claim 1, **characterized in that** the three inserts (7, 8, 9) are arranged in steps around the tool-holder body (3), such as to penetrate in succession in the material.

3. Rotary boring tool according to Claims 1 or 2, **characterized in that** the tip angle of the finishing insert (8) is between 35° and 40°.

4. Rotary boring tool according to Claim 1, 2 or 3, **characterized in that** the cutting ridges (7a, 8a, 9a) of the inserts (7, 8, 9) are made of metal carbide.

5. Rotary boring tool according to one of the preceding claims, **characterized in that** the cutting ridges (8a) are made of cubic boron nitride (CBN).

6. Rotary boring tool according to one of Claims 1 to 5, **characterized in that** the ridges (7a, 8a, 9a) of the inserts (7, 8, 9) are made of polycrystalline diamonds.

7. Method for finishing machining a cylinder bore in a combustion engine housing, **characterized in that** it uses a rotary machining tool (1) according to one of Claims 1 to 6, the method combining, during the same passage of the tool, simultaneous operations of roughing of grooves, cutting of grooves, and surface flattening, these being carried out respectively by a first generally triangular roughing insert (7), a second finishing insert (8) for finishing the grooves rough-cut by the first, and a third flattening insert (9).

8. Method for finishing-machining according to Claim 7, **characterized in that** the machined surface makes it possible to apply a coating in order to regularize the depth of the hollow grooves.
